# EUROPÄISCHE PATENTSCHRIFT

(11) **EP 3 571 086 B1**
(45) Veröffentlichungstag und Bekanntmachung des Hinweises auf die Patenterteilung: **13.01.2021**
(21) Anmeldenummer: 18711019.2
(22) Anmeldetag: 22.02.2018
(51) Int. Cl.: B60L 5/36, B60L 5/42, B60L 5/22, B60L 5/28

(54) **STROMABNEHMER FÜR MEHRPOLIGES FAHRLEITUNGSSYSTEM**
CURRENT COLLECTOR FOR MULTIPOLE OVERHEAD CONTACT LINE SYSTEM
COLLECTEUR DE COURANT POUR SYSTÈME DE LIGNES AÉRIENNES DE CONTACT MULTIPOLAIRES

(30) Priorität: 24.02.2017 DE 102017203046
(43) Veröffentlichungstag der Anmeldung: 27.11.2019
(73) Patentinhaber: Siemens Mobility GmbH, 81739 München (DE)
(72) Erfinder: FRANCKE, Jürgen, 12524 Berlin (DE)
(86) Internationale Anmeldenummer: PCT/EP2018/054379
(87) Internationale Veröffentlichungsnummer: WO 2018/153983

(56) Entgegenhaltungen:
- EP-A1- 2 857 252
- DE-A1-102012 213 460
- DE-A1-102013 202 671
- DE-C1- 19 725 906
- DE-C1- 19 814 417
- JP-A- H09 308 002

## Beschreibung

Die Erfindung betrifft einen Stromabnehmer für ein mehrpoliges Fahrleitungssystem. Zudem betrifft die Erfindung ein elektrifiziertes Transportsystem.

Elektrische Transportsysteme für den Transport von Gütern und Personen mit Fahrleitungen zur Versorgung von Fahrzeugen mit elektrischer Energie werden in vielen verschiedenen Varianten eingesetzt. Bei dem Einsatz von fahrspurgebundenen Versorgungssystemen für nicht schienengebundene Fahrzeuge werden üblicherweise mit Strom gespeiste zweipolige Oberleitungssysteme eingesetzt. Die zweipoligen Oberleitungen sind über elektrifizierten Fahrstreifen angeordnet und werden von elektrifizierten Nutzfahrzeugen mit Hilfe von aktiv nachregelnden Stromabnehmern kontaktiert. Gröbere Abweichungen von einer vorgesehenen Fahrspur werden mit Hilfe eines Fahrerassistenzsystems ausgeglichen, welches das Fahrzeug damit innerhalb einer zulässigen Toleranz unterhalb der Oberleitungen fahren lässt.

Mit Hilfe der aktiv nachregelnden Stromabnehmer werden durch konstruktive Systemmerkmale oder temporäre Umgebungsbedingungen verursachte, erhebliche Variationen in der horizontalen und vertikalen Lage oberhalb der Fahrspur im Vergleich zur Nennlage kompensiert. Beispielsweise weisen elektrifizierte Straßenfahrzeuge zur Nachregelung des Stromabnehmers einen Fahrleitungsdetektor auf, dessen Informationen zur Steuerung des Stromabnehmers verwendet werden. Bei der Regelung wird eine seitliche Auslenkung des Stromabnehmers bzw. von dessen Schleifleisten vorgenommen. Für eine dauerhafte gleichmäßige Kontaktierung einer zweipoligen Fahrleitung muss also ein erheblicher technischer Aufwand getrieben werden.

Dokument DE 10 2012 213460 A1 zeigt einen Stromabnehmer für zwei Fahrleitungen auf, jedoch ohne Ausgleichswippe zum Ausgleich einer Höhendifferenz zwischen den beiden Fahrleitungen.

Dokument DE 10 2013 202671 A1 zeigt einen weiteren Stromabnehmer für zwei Fahrleitungen.

Mithin besteht ein Problem darin, einen Pantographen zu entwickeln, der mit geringerem Aufwand als bei herkömmlichen

Systemen, eine möglichst ununterbrochene mehrpolige Kontaktierung einer Oberleitung während der Fahrt eines elektrifizierten Fahrzeugs ermöglicht.

Diese Aufgabe wird durch einen Stromabnehmer für ein mehrpoliges Fahrleitungssystem gemäß Patentanspruch 1 und durch ein elektrifiziertes Transportsystem gemäß Patentanspruch 10 gelöst.

Der erfindungsgemäße Stromabnehmer für ein mehrpoliges Fahrleitungssystem umfasst einen auf einer Basis schwenkbar montierten Unterarm, im Folgenden auch unterer Arm genannt. Ein solcher Unterarm ist vorzugsweise schwenkbar um eine erste Achse in Querrichtung, d.h. senkrecht zum Verlauf der Fahrleitung und zur Fahrtrichtung eines mit dem Stromabnehmer ausgerüsteten elektrifizierten Fahrzeugs. Die Bezeichnung "unterer Arm" bzw. "Unterarm", welche in der Anmeldung gleichbedeutend genutzt werden, soll in dieser Anmeldung bedeuten, dass der entsprechende Tragarm des Stromabnehmers zur Basis hin angeordnet ist. Weiterhin weist der erfindungsgemäße Stromabnehmer mindestens zwei an einem der Basis entgegengesetzten Ende des Unterarms relativ zueinander schwenkbar montierte Oberarme, auch obere Arme genannt, auf. Die Bezeichnung "oberer Arm" bzw. "Oberarm", welche in der Anmeldung gleichbedeutend genutzt werden, soll in dieser Anmeldung bedeuten, dass der entsprechende Tragarm des Stromabnehmers bei einem Kontakt des Stromabnehmers mit der Fahrleitung zur Fahrleitung hin bzw. auf der von der Basis abgewandten Seite angeordnet ist. Die mindestens zwei Oberarme können relativ zu dem Unterarm um eine vorzugsweise gemeinsame zweite Achse, welche parallel zu der ersten Achse verläuft, geschwenkt werden. Zudem können die mindestens zwei Oberarme auch relativ zueinander geschwenkt. Vorzugsweise weisen die mindestens zwei Oberarme gleiche Abmessungen auf. Die beiden Oberarme können also in gewissen Grenzen unterschiedliche Schwenkpositionen einnehmen, so dass zum Beispiel Höhendifferenzen zwischen unterschiedlichen Fahrdrähten bzw. Polen der Fahrleitung ausgeglichen werden können. Als Pole sollen in dieser Anmeldung Fahrdrähte mit unterschiedlichem elektrischen Potential oder unterschiedlicher Phase verstanden werden. Bei Gleichstromsystemen liegen an den unterschiedlichen Fahrdrähten unterschiedliche Potentiale an, während bei Wechselstrom- bzw. Drehstromsystemen einzelne Fahrdrähte unterschiedliche Phasen aufweisen.

Teil des erfindungsgemäßen Stromabnehmers sind zudem mindestens zwei an den jeweiligen Oberarmen angeordnete, separate, unterschiedlichen Polen einer Fahrleitung zugeordnete Kontakt-Baugruppen. Diese Kontaktbaugruppen dienen dazu, einen Kontakt zwischen dem Stromabnehmer und den Fahrdrähten des mehr-poligen Fahrleitungssystems herzustellen. Derartige Kontaktbaugruppen können zum Beispiel als Kontaktwippen ausgebildet sein, die jeweils mehrere Schleifleisten aufweisen.

Überdies umfasst der erfindungsgemäße Stromabnehmer eine an der Basis angeordnete zentrale Ausgleichswippe und mindestens zwei Zugstangen, deren erstes Ende jeweils schwenkbar mit der zentralen Ausgleichswippe verbunden ist und deren zweites Ende jeweils mit einem der mindestens zwei Oberarme schwenkbar verbunden ist. Mit Hilfe der Ausgleichswippe werden bei in exakt gleicher Höhe verlaufenden unterschiedlich-poligen Fahrdrähten Schwenkbewegungen der Zugstangen um eine parallel zur ersten Achse verlaufende Achse ermöglicht. Zusätzlich erlaubt die Ausgleichswippe eine Schwenkbewegung der Ausgleichswippe senkrecht zu der ersten Achse, so dass die mindestens zwei Zugstangen zueinander parallel verschoben werden können, wenn zum Beispiel die mindestens zwei unterschiedlich-poligen Fahrdrähte in einer leicht unterschiedlichen Höhe verlaufen. Die beiden Zugstangen üben auf die mindestens zwei Oberarme Zugkräfte aus, mit deren Hilfe die beiden Kontaktwippen gegen die Fahrdrähte der Fahrleitungen gepresst werden. Mit Hilfe der Ausgleichswippe werden die beiden Kontaktbaugruppen jeweils mit gleichem Anpressdruck gegen die unterschiedlich-poligen Fahrdrähte gepresst, so dass auch bei einer Variation der Höhe der Fahrdrähte relativ zueinander eine störungsfreie Versorgung eines elektrifizierten Fahrzeugs mit elektrischer Energie gewährleistet ist.

Der erfindungsgemäße Stromabnehmer kann im Prinzip als ein, durch bestimmte Mechaniken erweiterter, klassischer Halbpantograph aufgefasst werden. Zu den Erweiterungen gehören mindestens ein zweiter Oberarm, der mit einer weiteren Zugstange aufgerichtet wird, und eine Ausgleichswippe, die zur Verteilung der in den Unterarm eingeleiteten Kraft zur Erzeugung einer gleichmäßigen Andruckkraft an die Fahrdrähte eingesetzt wird.

Das erfindungsgemäße elektrifizierte Transportsystem weist ein mehrpoliges Fahrleitungssystem auf und mindestens ein elektrifiziertes Transportfahrzeug mit mindestens einem erfindungsgemäßen Stromabnehmer.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Variante des erfindungsgemäßen Stromabnehmers ist der Stromabnehmer für ein zweipoliges Fahrleitungssystem ausgebildet, wobei die Zahl der Oberarme, der Kontaktbaugruppen und der Zugstangen genau zwei beträgt. Ein zweipoliges Fahrleitungssystem kann zum Beispiel ein Gleichstromsystem mit einem Pluspol und einem Minuspol bzw. einer Zuleitung und einer Rückleitung sein. Solche Systeme werden zum Beispiel bei straßengebundenen elektrifizierten Transportsystemen eingesetzt. Diese haben den Vorteil eines geringeren Platzbedarfs der Fahrzeugkomponenten und einer erhöhten Sicherheit.

In einer bevorzugten Ausgestaltung des erfindungsgemäßen Stromabnehmers sind die mindestens zwei Zugstangen über Gelenke mit der zentralen Ausgleichswippe verbunden. Die Gelenke erlauben eine Schwenkbewegung der Zugstangen relativ zu der zentralen Ausgleichswippe und dienen dazu, bei einer Zugbewegung oder einer Druckbewegung der Zugstangen eine Ausgleichsbewegung der Ausgleichswippe zu bewirken. Wirkt zum Beispiel auf eine der mindestens zwei Zugstangen eine größere Zugspannung infolge eines höheren Anpressdrucks des zugehörigen Stromabnehmers an einen der mindestens zwei Fahrdrähte, so wird durch die zugehörige Zugstange einseitig auf die Ausgleichswippe eine stärkere Zugkraft ausgeübt. Dies führt zu einer Ausgleichsbewegung der Ausgleichswippe, wodurch die Zugstange oder die Zugstangen, die vorher eine geringere Zugkraft auf die Ausgleichswippe ausgeübt hat bzw. haben, nach unten, d.h. von dem Fahrdraht weg gezogen werden. Bei diesem Vorgang wird der entsprechende Oberarm bzw. werden die entsprechenden Oberarme in Richtung des zugehörigen Fahrdrahts bewegt, so dass nun auf der Seite oder den Seiten, auf der bzw. auf denen bisher ein niedrigerer Anpressdruck des Stromabnehmers herrschte, der Anpressdruck vergrößert wurde, wodurch der unterschiedliche Anpressdruck gegen die mindestens zwei Fahrdrähte ausgeglichen wird. Die Nachgiebigkeit des Unterarms mit seinem Antrieb jedoch sorgt dafür, dass die Summe der Andruckkräfte an die Fahrdrähte im Wesentlichen konstant bleibt.

In einer besonders vorteilhaften Ausgestaltung des erfindungsgemäßen Stromabnehmers sind die mindestens zwei Zugstangen jeweils mit einem über eine Schwenkachse zwischen dem Unterarm und einem jeweiligen Oberarm hinausstehenden Ende eines jeweiligen Oberarms schwenkbar verbunden. Diese Anordnung bewirkt, dass bei einem Aufrichten des Unterarms aufgrund der Zugkraft der Zugstangen am jeweiligen Oberarm die mindestens zwei Oberarme des Stromabnehmers aufgerichtet werden und die beiden an den Oberarmen befestigten Kontaktwippen gegen die Fahrdrähte gepresst werden.

Bevorzugt sind die mindestens zwei Zugstangen jeweils durch Gelenklager mit einem jeweiligen über eine Schwenkachse zwischen dem Unterarm und einem jeweiligen Oberarm hinausstehenden Ende eines jeweiligen Oberarms schwenkbar verbunden. Vorteilhaft können Schwenkbewegungen zwischen den Oberarmen und den Zugstangen reibungsarm übertragen werden.

In einer Variante des erfindungsgemäßen Stromabnehmers wird die zentrale Ausgleichswippe auf der Basis mit einem Kreuzlager gelagert. Ein solches Kreuzlager erlaubt zum Beispiel für den Fall eines zweipoligen Systems mit zwei Kontaktbaugruppen und zwei Oberarmen eine Schwenkbewegung der Ausgleichswippe sowohl um eine Achse parallel zur Schwenkachse des Unterarms und des Oberarms als auch senkrecht dazu. Vorteilhaft kann die Ausgleichswippe sowohl die Schwenkbewegungen des Unterarms, z.B. beim generellen Nachführen des Stromabnehmers bei steigender oder fallender Höhe der Fahrdrähte, mitvollziehen als auch eine Ausgleichsbewegung um eine Achse senkrecht dazu ausführen, um die beiden Oberarme relativ zu einander zu schwenken und auf diese Weise einen unterschiedlichen Anpressdruck der an den beiden Oberarmen angeordneten Kontaktwippen an in unterschiedlicher Höhe positionierte Fahrdrähte auszugleichen.

In einer Ausgestaltung des erfindungsgemäßen Stromabnehmers umfasst der Stromabnehmer ein die Höhendifferenz der Kontaktbaugruppen beschränkendes Element. Mit Hilfe diese Elements kann zum Beispiel bei einem Übergang eines Fahrdrahtes von einer Kontaktbaugruppe auf die andere, wenn das Fahrzeug beispielsweise unplanmäßig eine Fahrspur verlässt, eine Beschädigung der Fahrleitung durch eine seitliche Krafteinwirkung des Stromabnehmers auf den Fahrdraht vermieden werden. Mithin wird eine einfache Differenzhöhenbegrenzung der Kontaktbaugruppen direkt zwischen den Oberarmen hergestellt. Dabei wird ein eventueller Fahrdrahtübergang von einer Kontaktbaugruppe zur anderen sichergestellt und beim Ein- und Abdrahten eine aus Sicherheitsgründen benötigte Synchronizität hergestellt. In einer speziellen Variante des erfindungsgemäßen Stromabnehmers umfasst das die Höhendifferenz der Kontaktwippen beschränkende Element mindestens eine Querstange. Die Querstange ist an einem ersten Oberarm der mindestens zwei Oberarme befestigt und ragt in eine Bohrung des zweiten Oberarms hinein. Die Bohrung weist eine in Abhängigkeit von einer erlaubten Höhendifferenz festgelegte Abmessung auf, welche größer ist als die Abmessung der Querstange. Die Querstange hat bei einer Relativbewegung der beiden Oberarme die Möglichkeit, sich innerhalb der Bohrung zu bewegen, bis sie bei einem Erreichen eines vorbestimmten Maximalmaßes einer relativen Schwenkbewegung am Rand der Bohrung anstößt. Auf diese Weise wird ein Schwenkwinkel zwischen den beiden Oberarmen beschränkt und damit auch eine maximale Höhendifferenz der an den Oberarmen montierten Kontaktwippen festgelegt.

In einer Ausgestaltung des erfindungsgemäßen Stromabnehmers weist dieser elektrische Isolationen zwischen mindestens einer Kontaktbaugruppe und den darunterliegenden Armelementen auf. Dadurch wird ein Kurzschluss der von den unterschiedlichen Kontaktbaugruppen erfassten unterschiedlichen Potentiale vermieden. Die Isolationen verhindern also ein Kurzschließen unterschiedlich gepolter Kontaktbaugruppen.

In einer Variante des erfindungsgemäßen Stromabnehmers weisen die Oberarme jeweils zwei durch Isolatoren getrennte Teilstücke auf. Die Isolatoren vermeiden ein Kurzschließen unterschiedlich gepolter Stromabnehmer und stellen dadurch die Mehrpoligkeit des Systems sicher. Der von den Stromabnehmern bezogene elektrische Strom kann zum Beispiel über Stromkabel, welche an den Oberarmen und dem Unterarm entlang laufen, zu den Verbrauchereinheiten eines den Stromabnehmer tragenden Fahrzeugs geführt werden.

In einer speziellen Ausgestaltung des erfindungsgemäßen elektrifizierten Transportsystems ist das elektrifizierte Transportsystem nicht schienengebunden. Besonders bevorzugt ist das elektrifizierte Transportsystem straßengebunden, wobei das elektrifizierte Transportfahrzeug ein Straßenfahrzeug ist. Straßenfahrzeuge führen bauartbedingt Spurwechsel aus, bei denen ein sicheres Anbügeln und Abbügeln der Stromabnehmer gewährleistet sein sollte. Vorteilhaft wird mit dem erfindungsgemäßen Stromabnehmer eine gleichmäßige Anpresskraft der Kontaktbaugruppen an den Fahrdrähten erreicht. Infolge der Begrenzung der Höhendifferenz kann bei einem nicht beabsichtigten Spurwechsel eine Havarie des Stromabnehmers mit einem Fahrdraht vermieden werden.

Die Erfindung wird im Folgenden unter Hinweis auf die beigefügten Figuren anhand von Ausführungsbeispielen noch einmal näher erläutert. Es zeigen:
- FIG 1: eine perspektivische Ansicht eines Stromabnehmers gemäß einem Ausführungsbeispiel der Erfindung,
- FIG 2: eine perspektivische Ansicht einer zentralen Ausgleichswippe des in FIG 1 gezeigten Stromabnehmers,
- FIG 3: eine perspektivische Darstellung eines Kreuzlagers der in FIG 2 gezeigten zentralen Ausgleichswippe,
- FIG 4: eine perspektivische Darstellung einer zentralen Ausgleichswippe,
- FIG 5: eine Draufsicht auf die beiden achsnahen Enden der beiden oberen Arme eines Stromabnehmers gemäß einem Ausführungsbeispiel der Erfindung,
- FIG 6: eine Seitenansicht der in FIG 5 gezeigten beiden achsnahen Enden der beiden oberen Arme eines Stromabnehmers gemäß einem Ausführungsbeispiel der Erfindung.

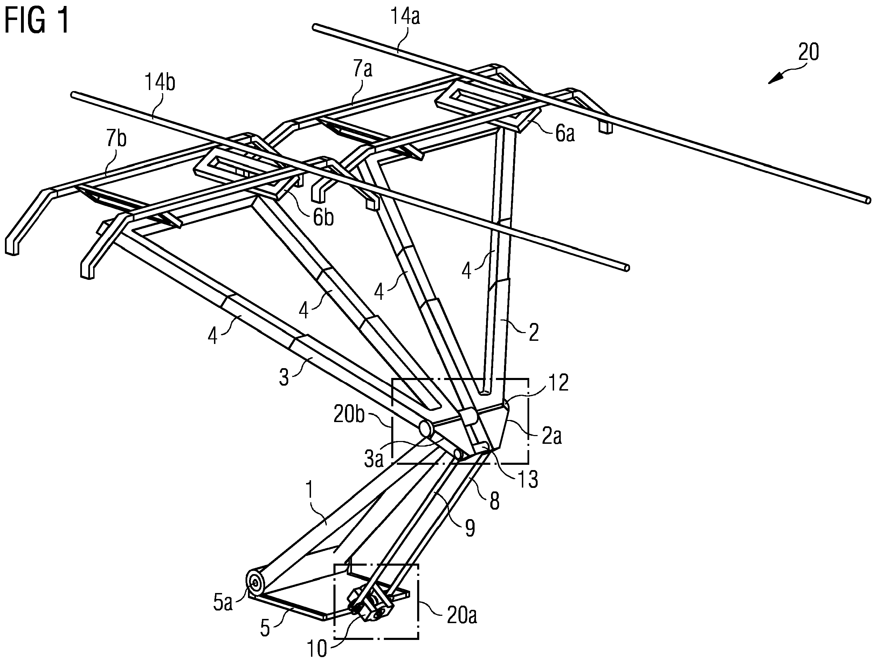

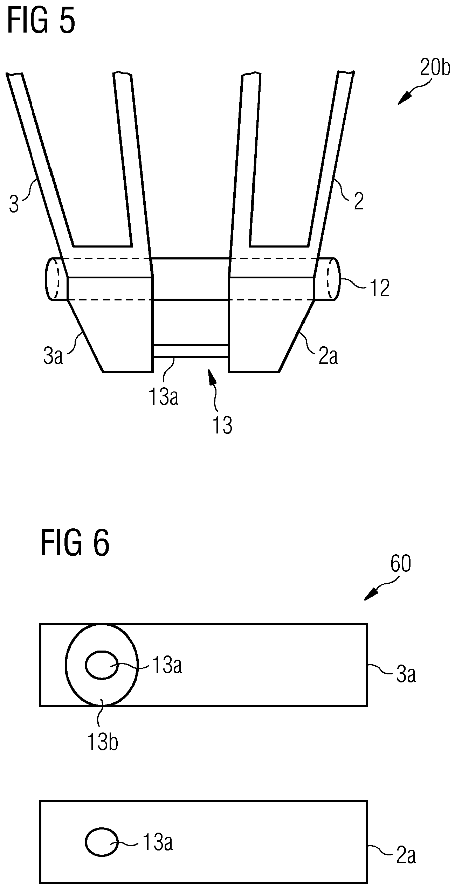

In FIG 1 ist ein Stromabnehmer 20 gemäß einem Ausführungsbeispiel der Erfindung gezeigt. Der Stromabnehmer umfasst einen unteren Arm 1 und zwei obere Arme 2, 3, die jeweils zwei durch Isolatoren 4 getrennte Teilstücke umfassen und mit dem unteren Arm 1 über eine an dem unteren Arm 1 angeordnete Achse 12 schwenkbar verbunden sind. Die Isolatoren 4 vermeiden ein Kurzschließen unterschiedlich gepolter Kontaktbaugruppen und stellen dadurch die Zweipoligkeit des Systems sicher. Der von den Kontaktbaugruppen bezogene elektrische Strom kann zum Beispiel über Stromkabel, welche an den oberen Armen 2, 3 und dem unteren Arm 1 entlang laufen, zu den Verbrauchereinheiten eines den Stromabnehmer 20 tragenden Fahrzeugs (nicht gezeigt) geführt werden. Die beiden oberen Arme 2, 3 weisen jeweils ein über die Achse 12 zwischen den beiden oberen Armen 2, 3 und dem unteren Arm 1 hinausragendes Ende bzw. Endstücke 2a, 3a auf. Eine Darstellung eines Teilbereichs 20b um die beiden Endstücke 2a, 3a ist in FIG 5 im Detail veranschaulicht. Der untere Arm 1 ist über eine Achse 5a mit einer Basis 5 schwenkbar verbunden. Die Basis 5 kann zum Beispiel auf dem Dach eines elektrifizierten Fahrzeugs (nicht gezeigt) montiert sein. Die Kontaktbaugruppen umfassen an dem vom unteren Arm 1 abgewandten Ende der beiden oberen Arme 2, 3 jeweils angeordnete Träger 6a, 6b, welche jeweils eine für die Stromabnahme geeignete Schleifleiste 7a, 7b tragen, mit denen elektrischer Strom von unterschiedlich gepolten Fahrdrähten 14a, 14b bezogen wird. Die beiden Zugstangen 8, 9 sind mit den über die Achse 12 zwischen den beiden oberen Armen 2, 3 und dem unteren Arm 1 hinausragenden Enden 2a, 3a der oberen Arme 2, 3 schwenkbar verbunden.

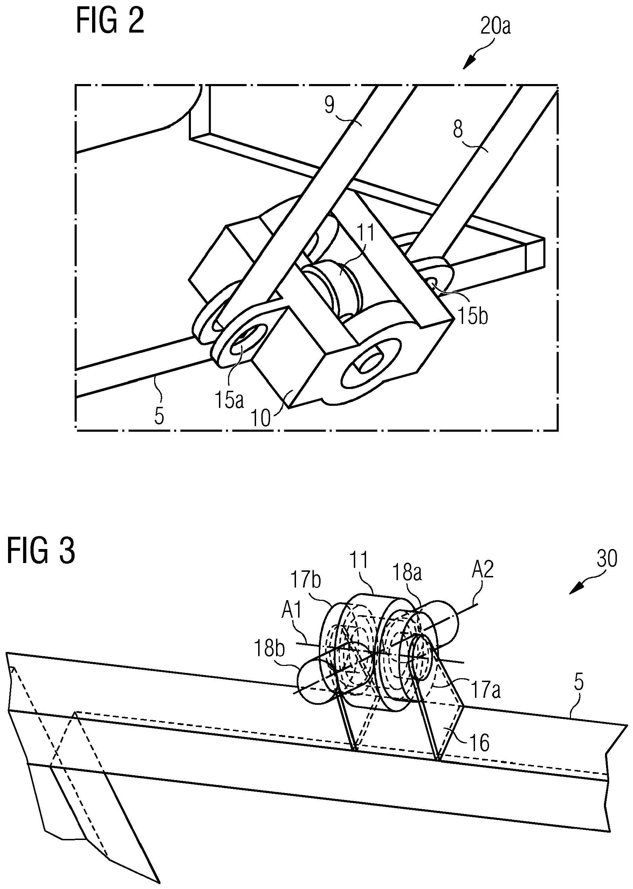

Zudem sind die beiden Zugstangen 8, 9 über Gelenke 15a, 15b (siehe FIG 2) mit einer zentralen Ausgleichswippe 10 verbunden.

Wie in FIG 2 in einer Teilbereichsdarstellung 20a der FIG 1 zu erkennen ist, weist die Ausgleichswippe 10 ein Kreuzlager 11 auf, über das sie mit der Basis 5 schwenkbar verbunden ist. Das Kreuzlager 11 erlaubt sowohl eine Schwenkbewegung der Ausgleichswippe 10 um eine Achse parallel zur Achse 5a des unteren Arms 1, welche zum Beispiel bei einem Aufrichten oder Zusammenklappen des Stromabnehmers 20 notwendig ist, als auch eine Schwenkbewegung um eine Achse senkrecht zu der Achse 5a des unteren Arms 1, mit deren Hilfe eine Ausgleichsbewegung zum gleichmäßigen Anpressen der Schleifleisten 7a, 7b an die verschiedenen Pole 14a, 14b einer Fahrleitung ermöglicht wird. Der untere Arm 1 und die oberen Arme 2, 3 können durch ein geeignetes Drehmoment am unteren Arm 1 aufgerichtet werden, bis sich die Kontaktbaugruppen 7a, 7b an die Pole 14a, 14b, auch Fahrdrähte genannt, legen.

Mit Hilfe der zentralen Ausgleichswippe 10 wird die Andrucckraft gleichmäßig auf die beiden Kontaktbaugruppen 7a, 7b verteilt, auch wenn die beiden Fahrdrähte 14a, 14b eine Höhendifferenz aufweisen. Zusätzlich umfasst der in FIG 1 gezeigte Stromabnehmer noch ein Beschränkungselement 13 zur Beschränkung der möglichen Höhendifferenz zwischen den beiden Kontaktbaugruppen 7a, 7b. Das Beschränkungselement 13 ist an den beiden achsnahen Enden 2a, 3a der beiden oberen Arme 2, 3 angeordnet. Die Beschränkung der Höhendifferenz ist notwendig, um zum Beispiel bei einem unplanmäßigen Verlassen der Spur durch das elektrifizierte Fahrzeug einen Übergang eines Fahrdrahts 14a von einer Schleifleiste 7a zur anderen Schleifleiste 7b zu ermöglichen.

In FIG 3 ist eine perspektivische Darstellung 30 des Kreuzlagers 11 der in FIG 2 gezeigten zentralen Ausgleichswippe 10 veranschaulicht. Das Kreuzlager 11 ist mit Hilfe einer Halterung 16 an der Basis 5 des Stromabnehmers befestigt. Das Kreuzlager 11 weist zwei in Querrichtung orientierte Lager 17a, 17b auf. Die Innenseiten der beiden in Querrichtung orientierten Lager 17a, 17b sind um eine Querachse A1, die parallel zur Achse 5a des unteren Arms 1 orientiert ist, drehbar. Das Kreuzlager 11 weist zudem zylinderförmige Achselemente 18a, 18b auf, die um eine senkrecht zur Querachse A1 drehbare Längsachse A2 drehbar sind.

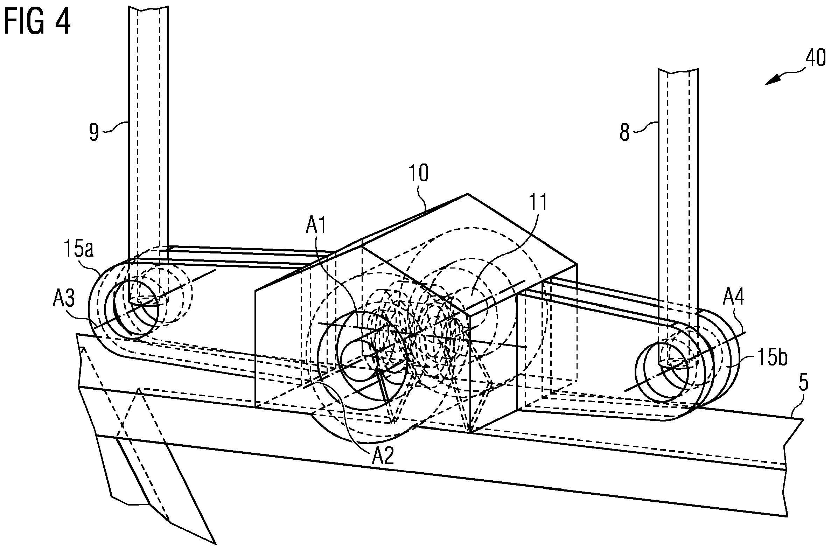

In FIG 4 ist eine perspektivische Darstellung 40 einer zentralen Ausgleichswippe 10 mit dem in FIG 3 veranschaulichten Kreuzlager 11 gezeigt. Wie in FIG 4 zu erkennen ist, lässt sich die Ausgleichswippe 10 um die beiden orthogonal zueinander orientierten Drehachse A1, A2 schwenken. Auf beiden Seiten in Querrichtung weist die zentrale Ausgleichswippe 10 die bereits erwähnten Gelenke 15a, 15b auf, in denen jeweils eine Zugstange 8, 9 um eine jeweilige, parallel zu der Längsachse A2 des Kreuzlagers 11 verlaufende Achse A3, A4 schwenkbar angeordnet ist.

In FIG 5 ist eine Draufsicht auf einen in FIG 1 bereits markierten Teilbereich 20b gezeigt. Dieser Teilbereich 20b umfasst die beiden achsnahen Enden 2a, 3a der beiden oberen Arme 2, 3. Wie bereits erwähnt wird ein maximaler Schwenkwinkel und damit eine maximale Höhendifferenz zwischen den beiden oberen Armen 2, 3 durch ein Beschränkungselement 13 festgelegt. Das Beschränkungselement umfasst eine Querstange 13a, die in einem der beiden achsnahen Enden 2a, 3a, in diesem Ausführungsbeispiel in dem in FIG 5 auf der rechten Seite gezeichneten rechten Oberarm 2 bzw. dessen achsnahen Ende 2a, fixiert ist.

Wie in einer Seitenansicht 60 in FIG 6 zu erkennen ist, befindet sich in der inneren Seitenfläche des linken achsnahen Endes 3a des linken oberen Arms 3 eine Bohrung 13b, deren Durchmesser deutlich größer ist als der Durchmesser der Querstange 13a. Bei einem Schwenkvorgang der beiden oberen Arme 2, 3 relativ zueinander wird die Querstange 13a in der Bohrung 13b dezentriert, bis sie an der Innenwand der Bohrung 13b anstößt und damit den Schwenkwinkel zwischen den beiden oberen Armen 2, 3 beschränkt.

Es wird abschließend noch einmal darauf hingewiesen, dass es sich bei den beschriebenen Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Beispielsweise kann der erfindungsgemäße Stromabnehmer auch bei schienenbasierten Transportsystemen verwendet. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Stromabnehmer (20) für ein mehrpoliges Fahrleitungssystem, aufweisend:
- einen auf einer Basis (5) schwenkbar montierten Unterarm (1),
- mindestens zwei an einem der Basis (5) entgegengesetzten Ende des Unterarms (1) relativ zueinander schwenkbar montierte Oberarme (2, 3),
- mindestens zwei an den jeweiligen Oberarmen (2, 3) angeordnete, separate, unterschiedlichen Polen (14a, 14b) einer Fahrleitung zugeordnete Kontaktbaugruppen (7a, 7b),
- eine an der Basis (5) angeordnete zentrale Ausgleichswippe (10), **gekennzeichnet durch**
- mindestens zwei Zugstangen (8, 9), deren erstes Ende jeweils schwenkbar mit der zentralen Ausgleichswippe (10) verbunden ist und deren zweites Ende jeweils mit einem der mindestens zwei Oberarme (2, 3) schwenkbar verbunden ist.

2. Stromabnehmer nach Anspruch 1, für ein zweipoliges Fahrleitungssystem, wobei die Zahl der Oberarme (2, 3), der Kontaktbaugruppen (7a, 7b) und der Zugstangen (8, 9) genau zwei beträgt.

3. Stromabnehmer nach Anspruch 1 oder 2, wobei die beiden Zugstangen (8, 9) über Gelenke (15a, 15b) mit der zentralen Ausgleichswippe (10) verbunden sind.

4. Stromabnehmer nach einem der vorstehenden Ansprüche, wobei die beiden Zugstangen (8, 9) jeweils mit einem über eine Schwenkachse (12) zwischen dem Unterarm (1) und einem jeweiligen Oberarm (2, 3) hinausstehenden Ende eines jeweiligen Oberarms (2, 3) schwenkbar verbunden sind.

5. Stromabnehmer nach einem der vorstehenden Ansprüche, wobei die beiden Zugstangen (8, 9) jeweils durch Gelenklager mit einem jeweiligen über eine Schwenkachse (12) zwischen dem Unterarm (1) und einem jeweiligen Oberarm (2, 3) hinausstehenden Ende eines jeweiligen Oberarms (2, 3) schwenkbar verbunden sind.

6. Stromabnehmer nach einem der Ansprüche 2 bis 5, wobei die zentrale Ausgleichswippe (10) auf der Basis (5) mit einem Kreuzlager (11) gelagert ist.

7. Stromabnehmer nach einem der vorstehenden Ansprüche, welcher ein die Höhendifferenz der Kontakt-Baugruppen (7a, 7b) beschränkendes Element (13) umfasst.

8. Stromabnehmer nach Anspruch 7, wobei das die Höhendifferenz der Kontaktbaugruppen (7a, 7b) beschränkende Element (13) mindestens eine Querstange (13a) umfasst, die mindestens an einem ersten Oberarm (2) der mindestens zwei Oberarme (2, 3) befestigt ist und in eine Bohrung (13b) in dem mindesten zweiten Oberarm (3) der mindestens zwei Oberarme (2, 3) hineinragt, wobei die Bohrung (13b) eine in Abhängigkeit von einer erlaubten Höhendifferenz festgelegte Abmessung aufweist, welches größer ist als die Abmessung der Querstange (13a).

9. Stromabnehmer nach einem der Ansprüche 1 bis 8, wobei die Oberarme (2, 3) jeweils zwei durch Isolatoren (4) getrennte Teilstücke umfassen.

10. Elektrifiziertes Transportsystem, aufweisend:
- ein mehrpoliges Fahrleitungssystem,
- mindestens ein elektrifiziertes Transportfahrzeug mit mindestens einem Stromabnehmer nach einem der Ansprüche 1 bis 9.

11. Elektrifiziertes Transportsystem nach Anspruch 10, wobei das elektrifizierte Transportsystem nicht schienengebunden, vorzugsweise straßengebunden, ist und das elektrifizierte Transportfahrzeug ein nicht schienengebundenes Fahrzeug, vorzugsweise ein Straßenfahrzeug, ist.

## Claims

1. Current collector (20) for a multi-pole contact line system, having:
- a lower arm (1) pivotally mounted on a base (5),
- at least two upper arms (2, 3) which are pivotally mounted relative to one another on an end of the lower arm (1) opposite the base (5),
- at least two separate contact assemblies (7 a, 7b) which are arranged on the respective upper arms (2, 3) and are associated with different poles (14a, 14b) of a contact line,
- a central compensating rocker (10) arranged on the base (5), **characterised by**
- at least two connecting rods (8, 9) whose first end is pivotally connected to the central compensating rocker (10) respectively and whose second end is pivotally connected to one of the at least two upper arms (2, 3) respectively.

2. Current collector according to claim 1, for a two-pole contact line system, wherein the number of upper arms (2, 3), contact assemblies (7a, 7b) and connecting rods (8, 9) is exactly two.

3. Current collector according to claim 1 or 2, wherein the two connecting rods (8, 9) are connected to the central compensating rocker (10) by means of joints (15a, 15b).

4. Current collector according to one of the preceding claims, wherein the two connecting rods (8, 9) are each pivotally connected to an end of a respective upper arm (2, 3), which extends beyond a pivot axis (12) between the lower arm (1) and a respective upper arm (2, 3).

5. Current collector according to one of the preceding claims, wherein the two connecting rods (8, 9) are each pivotally connected by joint bearings to a respective end of a respective upper arm (2, 3), which extends beyond a pivot axis (12) between the lower arm (1) and a respective upper arm (2, 3) .

6. Current collector according to one of claims 2 to 5, wherein the central compensating rocker (10) is mounted on the base (5) with a cross bearing (11).

7. Current collector according to one of the preceding claims, which comprises an element (13) limiting the difference in height of the contact assemblies (7a, 7b).

8. Current collector according to claim 7, wherein the element (13) limiting the difference in height of the contact assemblies (7a, 7b) comprises at least one transverse rod (13a) which is fastened to at least one first upper arm (2) of the at least two upper arms (2, 3) and projects into a hole (13b) in the at least second upper arm (3) of the at least two upper arms (2, 3), wherein the hole (13b) has a dimension which is defined as a function of a permitted difference in height which is larger than the dimension of the transverse rod (13a).

9. Current collector according to one of claims 1 to 8, wherein the upper arms (2, 3) each comprise two sections which are separated by insulators (4).

10. Electrified transport system, having:
- a multi-pole contact line system,
- at least one electrified transport vehicle with at least one current collector according to one of claims 1 to 9.

11. Electrified transport system according to claim 10, wherein the electrified transport system is not rail-bound, is preferably road-bound, and the electrified transport vehicle is a non-rail-bound vehicle, preferably a road vehicle.

## Revendications

1. Appareil (20) de prise de courant d'un système de ligne de contact multipolaire, comportant :
- un bras (1) inférieur, monté pivotant sur une embase (5),
- au moins deux bras (2, 3) supérieurs, montés pivotants l'un par rapport à l'autre à une extrémité, opposée à l'embase (5) du bras (1) inférieur,
- au moins deux pôles (14a, 14b) différents distincts, disposés sur les bras (2, 3) supérieurs respectifs de modules (7a, 7b) de contact associés à une ligne de contact,
- un archet (10) central de compensation, monté sur l'embase (5),
**caractérisé par**
- au moins deux tirants (8, 9), dont la première extrémité est reliée, respectivement, à pivotement à l'archet (10) central de compensation et dont la seconde extrémité est reliée à pivotement, respectivement, à l'un des au moins deux bras (2, 3) supérieurs.

2. Appareil de prise de courant suivant la revendication 1 d'un système de lignes de contact bipolaires, dans lequel le nombre des bras (2, 3) supérieurs des modules (7a, 7b) de contact et des tirants (8, 9) est exactement de deux.

3. Appareil de prise de courant suivant la revendication 1 ou 2, dans lequel les deux tirants (8, 9) sont reliés à l'archet (10) central de compensation par des articulations (15a, 15b).

4. Appareil de prise de courant suivant l'une des revendications précédentes, dans lequel les deux tirants (8, 9) sont reliés chacun à pivotement à une extrémité, dépassant par un axe (12) de pivotement entre le bras (1) inférieur et un bras (2, 3) supérieur respectif, d'un bras (2, 3) supérieur respectif.

5. Appareil de prise de courant suivant l'une des revendications précédentes, dans lequel les deux tirants (8, 9) sont reliés à pivotement, respectivement, par un appui articulé ayant une extrémité en saillie par un axe (12) d'articulation entre le bras (1) inférieur et un bras (2, 3) supérieur respectif, d'un bras (2, 3) supérieur respectif.

6. Appareil de prise de courant suivant l'une des revendications 2 à 5, dans lequel l'archet (10) central de compensation est monté sur l'embase (5) par un palier (11) à la cardan.

7. Appareil de prise de courant suivant l'une des revendications précédentes, qui comprend un élément (13) limitant la différence de niveau entre les modules (7a, 7b) de contact.

8. Appareil de prise de courant suivant la revendication 7, dans lequel l'élément (13), limitant la différence de niveau entre les modules (7a, 7b) de contact, comprend au moins une traverse (13a), qui est fixée au moins à un premier bras (2) supérieur des au moins deux bras (2, 3) supérieurs et qui pénètre dans un trou (13b) du au moins un deuxième bras (3) supérieur des au moins deux bras (2, 3) supérieurs, le trou (13b) ayant une dimension, qui est fixée en fonction d'une différence de niveau autorisée et qui est plus grande que la dimension de la traverse (13a).

9. Appareil de prise de courant suivant l'une des revendications 1 à 8, dans lequel les bras (2, 3) supérieurs comprennent chacun des pièces partielles séparées par des isolateurs (4).

10. Système de transport électrifié, comportant :
- un système de ligne de contact multipolaire,
- au moins un véhicule de transport électrifié et au moins un appareil de prise de courant suivant l'une des revendications 1 à 9.

11. Système de transport électrifié suivant la revendication 10, dans lequel le système de transport électrifié n'est pas guidé sur rail, en étant de préférence sur route, et le véhicule de transport électrifié est un véhicule non guidé sur rail, en étant de préférence un véhicule routier.
